# EUROPEAN PATENT APPLICATION

(11) **EP 2 107 244 A1**
(43) Date of publication of application: **07.10.2009**
(21) Application number: 08103370.6
(22) Date of filing: 04.04.2008
(51) Int. Cl.: F04B 23/10, F04B 39/00, F16C 3/10, F02M 39/00

(54) **A pump device for supplying high pressure fuel to a fuel injection system**

(71) Applicant: ROBERT BOSCH GMBH, 70442 Stuttgart (DE)
(72) Inventor: Boecking, Friedrich, 70499 Stuttgart (DE)

(57) **Abstract**

The invention relates to a pump device used to supply fuel to a fuel injection system in an internal combustion engine. The pump device has a drive shaft (10) which has two parts (12, 20). The first part (12) of the drive shaft (10) is housed in a housing (25) of the high pressure pump 13 and moves at least one piston (33) of the high pressure pump (13). The second part (20) of the drive shaft (10) is housed in a housing (38) of the low pressure pump (23) and is connected to the low pressure pump (23) which is a gear pump. The two parts (12, 20) of the drive shaft (10) are manufactured separately and later joined permanently. The second part (20) of the drive shaft (10) is designed for a specific low pressure pump 23 whereas the first part (12) of the drive shaft (10) is independent of the low pressure pump (23).

## Description

### State of the Art

The invention relates to a pump device used to supply high pressure fuel to a fuel injection system in an internal combustion engine.

There are different types of pump devices used to supply high pressure fuel to the fuel injection system in combustion engines. The patent US 6,126,407 discloses one such pump device. The pump device disclosed in the prior art has a radial piston pump with a drive shaft which is supported in the pump housing and has an eccentric segment or cam like projections, a plurality of pistons disposed radially in the piston chambers relative to the drive shaft, the pistons moving radially back and forth in the piston chambers by rotation of the drive shaft, a check valve provided on intake side and the high pressure side, a low pressure pump connected before the radial piston pump and driven by the same drive shaft.

The pump device receives the fuel at lower pressure from the fuel tank and delivers the fuel at higher pressure.

The disadvantage of the pump device known in the prior art is that the drive shaft is specific to the type of low pressure pump. The drive shaft can not be used for different types of low pressure pumps. For each type of low pressure pump a specific drive shaft needs to be manufactured.

Also the drive shaft in the prior art can be used only when both pumps i.e. high pressure pump and low pressure pump are coupled to it. If the drive shaft has to be used only with a high pressure pump, a new drive shaft needs to be manufactured.

The invention proposes a simple solution for the disadvantage encountered.

### Advantages of the invention

The device according to the independent patent claim has the below mentioned advantages:

The high pressure pump according to the invention has a drive shaft which has two parts. The first part of the drive shaft is coupled to the driving element of the engine on one end and coupled to a high pressure pump on the other end. A second part of the drive shaft is coupled to the low pressure pump. The first part and the second part of the drive shaft are manufactured separately and later joined permanently.

The second part of the drive shaft is specific to the type of low pressure pump. So only the second part of the drive shaft needs to be manufactured for each type of the low pressure pump whereas the first part of the drive shaft can be re-used. This will reduce the manufacturing cost and time of the drive shaft.

Also the second part of the drive shaft is used only when a low pressure pump is needed along with the high pressure pump. When only a high pressure pump is needed, only the first part of the drive shaft is used. As the first part can be manufactured in large quantities and used with different types of second parts or also without a second part, the cost of manufacturing will be lower.

Further improvements and/or advantages are realised by the features of the dependent patent claims.

The joining of the two parts of the drive shaft is done using the known technologies of welding or friction welding or any other type of technique.

### Brief descriptions of the drawings

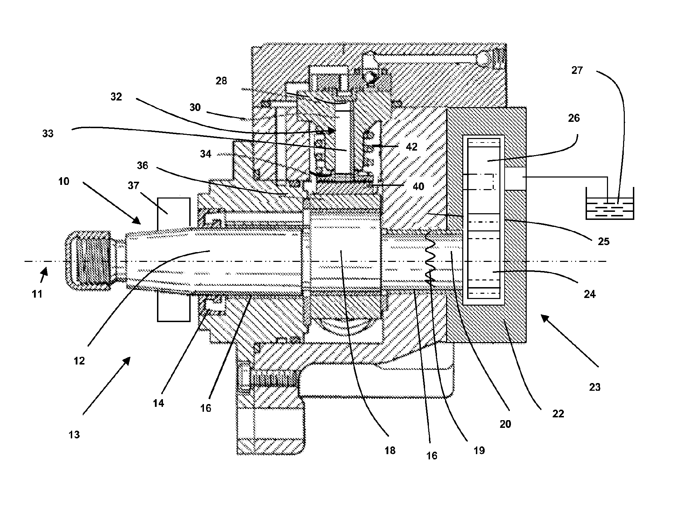

- Figure 1: shows a cross section of a pump device according to the invention

### Description of the embodiments

The figure 1 shows a cross section of a pump device supplying fuel to a fuel injection system in an internal combustion engine according the invention. The pump device is used, for example, in a common rail injection system for supplying fuel to the internal combustion engines.

A pump device typically receives the fuel from vehicle fuel tank through a fuel inlet and delivers the fuel at a higher pressure of up to 2000 bars to a common rail through a fuel outlet. The common rail supplies the fuel under high pressure to the fuel injectors.

The pump device shown in figure 1 comprises of a high pressure pump 13 with a housing 25 and a low pressure pump 23 with a housing 22. The pump device has a common drive shaft 10 for the high pressure pump 13 and low pressure pump 23. The drive shaft 10 has two parts, a first part 12 and a second part 20, which are manufactured separately and later joined permanently. The first part 12 is rotatably supported in the pump 25 of the high pressure pump 13 and having an eccentric segment 18. Instead of eccentric segment 16, there may be a cam. The drive shaft 10 is supported in bearings 16 in the housing 25, on both sides of the eccentric segment 18. A ring 36 is provided on the eccentric segment 18. The drive shaft 10 is rotatable relative to the ring 36. The ring 36 has three flat surfaces at an offset of 120 degrees with each other which are not shown in the figure. Each piston 33 rests on a flat surface of the ring 20. The drive shaft 10 rotates along the axis 11.

Each piston 33 moves in a cylinder bore 32, in a reciprocative manner in a radial direction with respect to the eccentric segment 18 of the drive shaft 10. The piston 33 bounds a pump chamber 28 in the cylinder bore 32.

At the end of the each piston 33, towards the eccentric segment 18, a spring plate 34 is fixed, against which a spring 42 is prestressed. The spring 42 presses the piston against a plate 40 which rests against a flat surface of the ring 36.

There is a sealing ring 14 provided between the drive shaft 10 and the pump housing 25, at a location where the drive shaft 10 is protruding outside of the pump housing opposite the low pressure pump 23. This sealing ring 40 is to avoid any leakage of the fuel from the pump to the outside of the pump housing 25.

The ring 36 is rotatably supported on the eccentric segment 18 of the first part 12 of the drive shaft 10. Upon rotation of the drive shaft 10, the flat surfaces of the ring 36 are set into motion in radial directions because of the eccentric segment 18. The flat surfaces of the ring 36 move in a cyclic order, radially, alternately towards and away from the axis of rotation 11 of the drive shaft 10.

When one of the flat surfaces of the ring 36 is moving radially towards the axis of the rotation 11, the plate 40 also moves radially towards the axis of the rotation 11. This causes the spring plate 34 also to move in the same direction. As the spring 42 is fixed to the spring plate 34, the spring 42 pulls the piston 33 in the same direction of movement of spring plate 34. The motion of the piston 33 in the cylinder bore 32 towards the axis of rotation 11 will cause a low pressure in the pump chamber 28 and the fuel rushes into the pump chamber 28 through a fuel inlet and an inlet valve which are not shown. The pre-stressed spring 42 acting upon the spring plate 34 which is fixed to the piston 33, keeps the piston 33 in abutment on the flat surface via the plate 40.

Because of the rotation of the eccentric segment 18, after reaching the closest point to the axis of rotation 11, the flat surface of the ring 36 starts moving away from the axis in radial direction. This will cause the plate 40 and the spring plate 34 also to move radially away from the axis of rotation 11. The movement of spring plate 34 will push the piston 33 inside the cylinder bore 32 in the same radial direction away from the axis of rotation 11. The movement of the piston 33 in the cylinder bore 32 will develop a high pressure in the pump chamber 28 which is filled with fuel. The fuel will rush out through a fuel outlet 27, under high pressure and reaches the common rail and the fuel injectors.

The flat surfaces of the ring 36 move alternatively towards and away from the axis of rotation 11 in a cyclic order, causing the pistons 33 to deliver the fuel under high pressure in a cyclic order.

The first part 12 of the drive shaft 10 is coupled to a driving element 37 outside the housing 25 of the high pressure pump 13 opposite the low pressure pump 23. This driving element 37 may consist of a pulley for a belt or a gear wheel or any similar mechanism. The driving element 37 connects the first part 12 of the drive shaft 10 to the engine, so that when the engine is running, the drive shaft 10 rotates.

The low pressure pump 23 can be, for example, a gear pump which is connected as a pre-feed pump before the high pressure pump 13. The low pressure pump 23 has a pump housing 22 and has gears 24 and 26 which mesh with each other. The gear 24 is a driving gear and is disposed non-rotatably on the second part 20 of the drive shaft 10 in the pump housing 22. The gear 26 is a driven gear.

The low pressure pump 23 receives the fuel from the fuel tank 27 and delivers the fuel at intermediate pressure of about 2 to 5 bars to the high pressure pump 13. The High pressure pump 13 delivers the fuel at high pressure to the fuel injection system.

To overcome the disadvantage in the prior art, the invention as explained already proposes to have the drive shaft 10 in two parts, a first part 12 and a second part 20. The first part 12 and the second part 20 of the drive shaft 10 are manufactured separately and later joined permanently using welding or friction welding or any other similar technique at a place 19. The first part 12 and a second part 14 may have form locking joint so that the torque can be transferred from one to another.

Because only the second part 20 of the drive shaft 10 is specific to a low pressure pump 23, only this second part 20 needs to be manufactured whenever there is a change in low pressure pump 23. As the first part 12 of the drive shaft is independent of the low pressure pump 13, the first part 12 can be manufactured in large quantities and can be used with different second parts 14 manufactured for different low pressure pumps.

Also when there is need of only high pressure pump 23, only the first part 12 of the drive shaft 10 can be used. This will avoid the need of manufacturing a separate drive shaft 10 only for high pressure pump 23. So the first part 12 of the drive shaft 10 can be either used only to drive a high pressure pump 23 or in combination with second part 20 to drive both high pressure 23 and low pressure pump 13 together.

Using of common first part 12 and manufacturing only a specific second part 14 of the drive shaft 10 will bring down the cost and time to manufacture the drive shaft 10 and also will reduce the infrastructure required for manufacturing the drive shafts.

## Claims

1. A pump device for supplying high pressure fuel to a fuel injection system of an internal combustion engine, the device comprising of
- a high pressure pump 13 with a drive shaft (10) rotatably supported in a pump housing (25) of the high pressure pump (13), at least one piston (33) which is moved by the drive shaft (10), the piston moving back and forth in a cylinder bore (32) by rotation of the drive shaft (10), a pump chamber (28) bounded in the cylinder bore (32) by the piston (33), at least one fuel inlet supplying fuel to the pump chamber, at least one fuel outlet for delivering the fuel under high pressure, the drive shaft being coupled to a driving element (50) outside the pump housing (25),
- a low pressure pump 23 provided in a pump housing (22), positioned at the remote end from the end of the drive shaft (10) coupled to the driving element (50) and driven by the drive shaft (10),
- **characterised in that** the drive shaft has two separate parts (12, 20), a first part (12) driving the high pressure pump 13, a second part (20) driving the low pressure pump 23, the first part (12) and the second part (20) of the drive shaft (10) being joined together permanently.

2. A pump device according to claim 1, wherein the second part (20) of the drive shaft (10) is specific to the type of low pressure pump (23).

3. A pump device according to claim 1, wherein the two parts (12, 20) of the drive shaft (10) are manufactured separately and later joined together.

4. A pump device according to claim 4, wherein the two parts (12, 20) of the drive shaft (10) are bonded together by welding.

5. A pump device according to claim 4, where in the two parts (12, 20) of the drive shaft (10) are bonded together by friction welding.

6. A pump device according to claim 4, wherein the two parts (12, 20) of the drive shaft (10) are joined by a form locking joint.
